# EUROPÄISCHE PATENTSCHRIFT

(11) **EP 2 020 513 B1**
(45) Veröffentlichungstag und Bekanntmachung des Hinweises auf die Patenterteilung: **20.04.2011**
(21) Anmeldenummer: 08160406.8
(22) Anmeldetag: 15.07.2008
(51) Int. Cl.: F16B 12/14

(54) **Beschlag zum Verbinden zweier Möbelplatten**
Fitting for connecting two furniture boards
Ferrure destinée à relier deux plaques de meubles

(30) Priorität: 02.08.2007 DE 202007010752 U
(43) Veröffentlichungstag der Anmeldung: 04.02.2009
(73) Patentinhaber: Hettich-Heinze GmbH & Co. KG, 32139 Spenge (DE)
(72) Erfinder: Brinkmann, Manfred-Wilhelm, 32609, Hüllhorst (DE); Feld, Steffen, 33378, Rheda Wiedenbrück (DE); Nolte, Frank, 49086, Osnabrück (DE)
(74) Vertreter: Dantz, Jan Henning

(56) Entgegenhaltungen:
- EP-A- 0 653 569
- DE-A1- 2 548 527
- FR-A- 2 712 642
- GB-A- 2 070 718
- GB-A- 2 241 038

## Beschreibung

Die vorliegende Erfindung betrifft einen Beschlag zum Verbinden zweier Möbelplatten, umfassend ein tangential angeschnittenes und in eine entsprechend angeschnittene Topfbohrung einer ersten Möbelplatte einsetzbares Gehäuse und einen an einer zweiten Möbelplatte festlegbaren Sockel, der teilweise in das Gehäuse hineinragt und durch eine Verbindungsschraube, deren Gewindebolzen in eine Einschraubbohrung des Sockels einschraubbar und deren Kopf im Gehäuse abgestützt ist, in Richtung des Gehäuses anzichbar ist, wobei die Längsachse der Verbindungsschraube und der Einschraubbohrung gegenüber der tangential verlaufenden Schnittfläche des Gehäuses geneigt verläuft.

Beschläge der vorerwähnten Art sind insbesondere in hochwertigen Ausführungsformen bekannt und haben sich zumindest grundsätzlich bewährt.

Ein Beschlag der gattungsgemäßen Art ist beispielsweise aus der GB 2 070 718 A bekannt. Die Besonderheit des dort gezeigten Verbindungsbeschlages besteht darin, dass beide Beschlagteile identisch ausgebildet und beide Beschlagteile in entsprechende Topfbohrungen der miteinander zu verhindenden Möbelplatten eingelassen sind.

Der vorliegenden Erfindung liegt die Aufgabe zugrunde, einen Beschlag der gattungsgemäßen Art zu schaffen, der sowohl äußerst preiswert herstellbar wie auch besonders einfach montierbar ist.

Diese Aufgabe wird erfindungsgemäß dadurch gelöst, dass der Sockel eine zweite Einschraubbohrung aufweist, die gegenüber der ersten Einschraubbohrung spiegelsymmetrisch verlaufe und dass der gesamte Sockel um eine durch den Schnittpunkt der Längsachsen der beiden Einschrauhbohrungen verlaufende Mittelebene spiegelsymmetrisch ausgebildet ist.

Der aus einer extrem geringen Anzahl von Einzelteilen bestehende und insoweit kostengünstig herstellbare Beschlag, kann aufgrund der spiegelsymmetrichen Ausbildung des Sockels auch bequem und einfach montiert werden, da es beim Befestigen des Sockels an einer zweiten Möbelplatte unbedeutend ist, in welcher Position dieser Sockel angesetzt und befestig wird, da die beiden ebenfalls spiegelsymmetrisch zueinander verlaufenden Einschraubbohrungen innerhalb des Sockels in jedem Falle eine Befestigung der beiden Beschlagteile zueinander ermöglichen. Die Verbindungsschraube findet unabhängig von der Einbaulage des Sockels immer eine entsprechende Einschraubbohrung, so das die Montage und die Verbindung mittels derartiger Beschläge beträchtlich vereinfacht wird.

Insbesondere unter herstelltechnischen Gesichtspunkten ist es vorteilhaft, wenn der Sockel zweistückig ausgebildet ist und ein Befestigungsteil sowie ein Verbindungsteil aufweist, wobei das Befestigungsteil mit Mitteln zur Festlegung an einer Möbelplatte und das Verbindungsteil mit den Einschraubbohrungen ausgestattet ist.

Bevorzugt sind sowohl der Sockel wie auch das Gehäuse aus Kunststoff hergestellt. Dies gilt auch, wenn der Sockel aus einem Befestigungsteil und einem Verbindungsteil besteht.

Gerade bei der Ausführung entsprechender Bauteile aus Kunststoff ist es unter spritzgusstechnischen Gesichtspunkten günstig, wenn das Verbindungsteil und das Befestigungsteil des Sockels unabhängig voneinander hergestellt werden können. Die Anbringung von spiegelsymmetrisch zueinander verlaufenden und einen Winkel zwischen sich einschließenden Einschraubbohrungen ist bei einem einfachen Verbindungsteil relativ leicht zu beherrschen.

Bevorzugt sind das Gehäuse und der Sockel bzw. das Befestigungsteil und das Verbindungsteil des Sockels aus Kunststoff hergestellt.

Nach einer weiteren Ausführungsform der Erfindung ist das Verbindungsteil durch Verrastung am Befestigungsteil festlegbar.

Dies bringt den Vorteil mit sich, dass die notwendige Verbindung zwischen dem Verbindungsteil und dem Befestigungsteil durch einfaches Zusammenstecken und Verrasten dieser beiden Teile gegeneinander ermöglicht wird.

Auch hier wird durch die spiegelsymmetrische Ausbildung der Vorteil erzielt, dass keine besondere Aufmerksamkeit aufgewendet werden muss, um die beiden besagten Teile zusammenzufügen, da diese praktisch auf Umschlag immer in einer die gewünschte Funktion erfüllenden Position zusammengefügt sind.

Weitere Merkmale der Erfindung sind Gegenstand weiterer Unteransprüche.

Ausführungsbeispiele der Erfindung sind in den beigefügten Zeichnungen dargestellt und werden im Folgenden näher beschrieben.

Es zeigen:

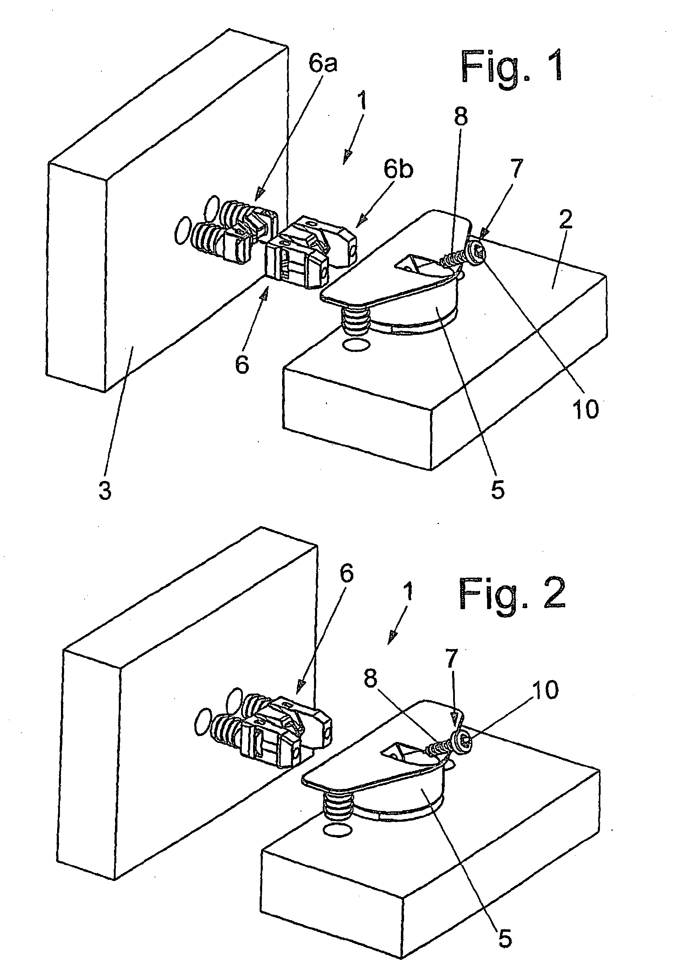

- Figur 1: eine perspektivische Sprengbilddarstellung eines erfindungsgemäßen Beschlages zum Verbinden zweier Möbelplatten
- Figur 2: eine der Figur 1 entsprechende Perspektivdarstellung, bei dem ein zweistückiger Sockel des Beschlages zusammengebaut ist

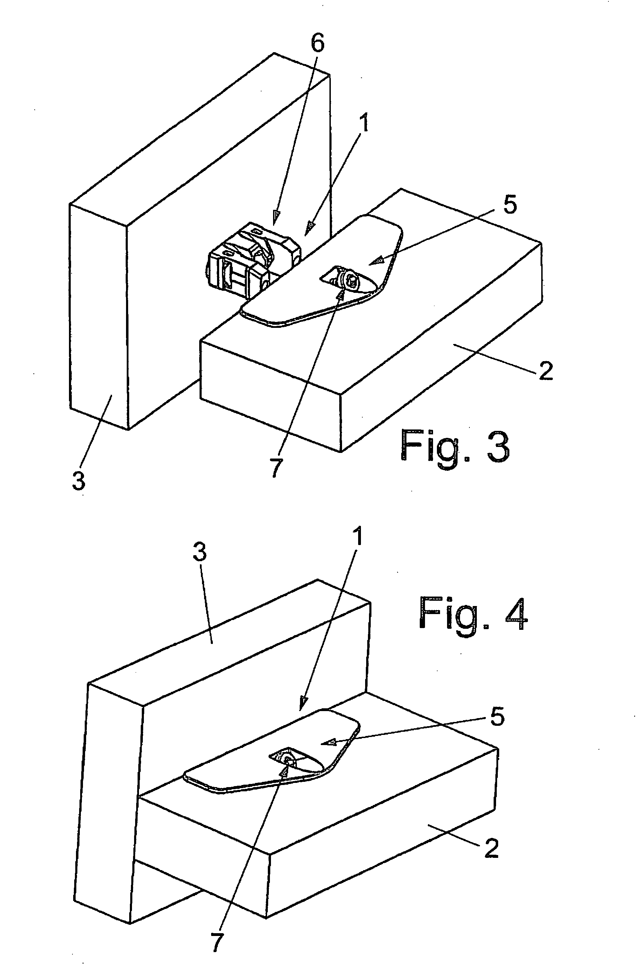

- Figur 3: eine der Figur 2 entsprechende Perspektivdarstellung nach der Festlegung sowohl des Sockels wie auch eines Gehäuses an den miteinander zu verbindenden Möbelplatten
- Figur 4: eine Perspektivdarstellung nach dem endgültigen Verbinden der beiden Möbelplatten
- Figur 5: einen Längsschnitt durch einen erfindungsgemäßen Beschlag in einer Vormontageposition
- Figur 6: einen der Figur 5 entsprechenden Längsschnitt durch den erfindungsgemäßen Beschlag in Verbindungsposition
- Figur 7: eine Sprengbilddarstellung eines erfindungsgemäßen Beschlages von seiner Oberseite her gesehen
- Figur 8: eine Sprengbilddarstellung des Beschlages gemäß Figur 7 von der Unterseite her gesehen
- Figur 9: eine Perspektivdarstellung eines Sockels eines erfindungsgemäßen Beschlages
- Figur 10: eine Perspektivdarstellung des Sockels gemäß Figur 9 aus einer entgegengesetzten Blickrichtung
- Figur 11: eine Sprengbilddarstellung der beiden Teile des Sockels gemäß den Figuren 9 und 10
- Figur 12: eine perspektivische Sprengbilddarstellung eines erfindungsgemäßen Beschlages, bei dem der Sockel an bekannten Klebedübeln befestigbar ist
- Figur 13: eine Sprengbilddarstellung gemäß Figur 12 nach Festlegung des Sockels an den Klebedübeln.

In den Zeichnungen ist mit dem Bezugszeichen 1 jeweils insgesamt ein Beschlag zum Verbinden zweier Möbelplatten 2 und 3 bezeichnet.

Der Beschlag umfasst ein tangential angeschnittenes und in eine entsprechend angeschnittene Topfbohrung 4 einer ersten Möbelplatte 2 einsetzbares Gehäuse 5 und einen an der zweiten Möbelplatte 3 festlegbaren Sockel 6.

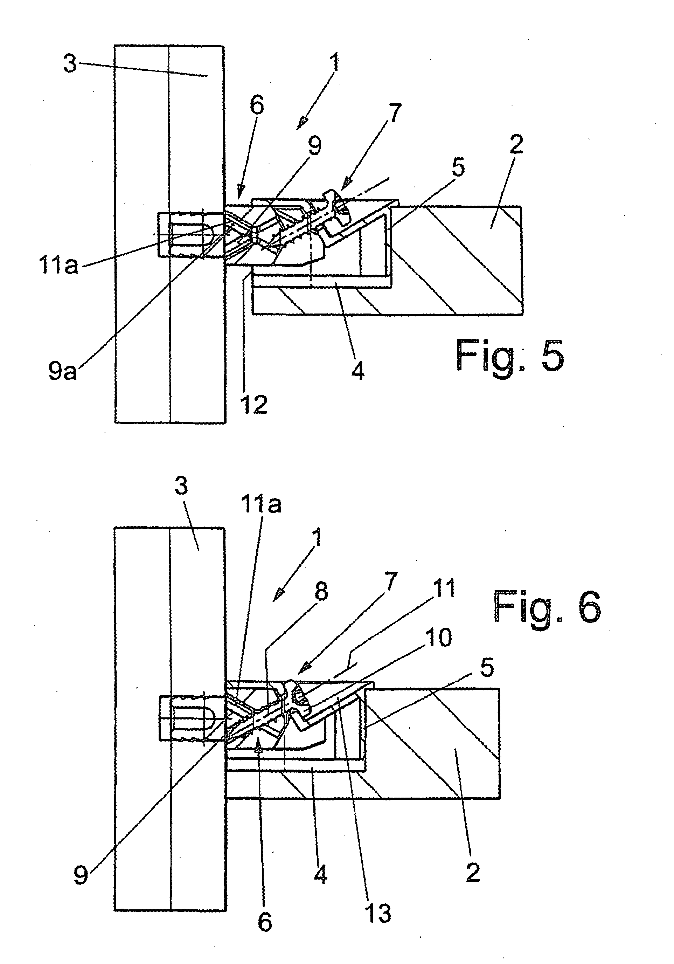

Die Topfbohrung 4 ist in den Figuren 5 und 6 deutlich zu erkennen.

Durch eine Verbindungsschraube 7, deren Gewindebolzen 8 in eine Einschraubbohrung 9 des Sockels 6 einschraubbar ist und deren Kopf 10 im Gehäuse 5 abgestützt ist, kann der Sockel 6 in Richtung des Gehäuses 5 angezogen werden. Dadurch wird auch ein Zusammenziehen der beiden Möbelplatten 2 und 3 relativ zueinander bewirkt, so dass eine feste Verbindung zwischen den beiden Möbelplatten 2 und 3 erzielt wird.

Wie wiederum aus den Figuren 5 und 6 besonders anschaulich hervorgeht, verläuft die Längsachse 11 der Verbindungsschraube 7 und der Einschraubbohrung 9 gegenüber der tangential verlaufenden Schnittfläche 12 des Gehäuses 5 geneigt, so dass der Kopf 10 der Verbindungsschraube 7 für einen Schraubendreher gut zugänglich ist, wie Figur 6 sehr deutlich zeigt. Im montierten Zustand liegt der Kopf 10 der Verbindungsschraube 7 innerhalb einer entsprechend der Neigung der Längsachse 11 verlaufenden Ansenkung 13 und steht somit nicht mehr über die Oberseite des Gehäuses 5 hinaus vor.

Wie besonders aus Figur 5 deutlich hervorgeht, ist der Sockel 6 mit einer zweiten Einschraubbohrung 9a ausgestattet, deren Längsachse 11a spiegelsymmetrisch zur Längsachse 11 der ersten Einschraubbohrung 9 verläuft.

Außerdem ist der Sockel 6 um eine durch den Schnittpunkt der beiden Längsachsen 11 und 11a der Einschraubbohrungen 9 und 9a verlaufenden Mittelebene spiegelsymmetrisch ausgebildet.

Durch diese Konstruktion ist es möglich, den Sockel 6 auch in einer gegenüber in den Figuren 5 und 6 gezeigten Lage um 180° gedreht an der zweiten Möbelplatte 3 festzulegen, ohne dass dadurch die Funktion des gesamten Beschlages 1 beeinträchtigt wird. Die Verbindungsschraube 7 kann dann nämlich in die zweite Einschraubbohrung 9a eingeschraubt werden. Der Vorteil dieser Maßnahme liegt darin, dass bei der Montage des Sockels 6 vom zuständigen Monteur keine besondere Aufmerksamkeit gefordert wird, in welcher Lage der Sockel 6 an der zweiten Möbelplatte 3 festzulegen ist.

Grundsätzlich kann der Sockel 6 einstückig hergestellt und vorteilhafterweise ebenso wie das Gehäuse 5 aus Kunststoff gefertigt sein.

Dabei ist es aber von großem Vorteil, wenn der Sockel 6 zweistückig ausgebildet ist und aus einem Befestigungsteil 6a sowie einem Verbindungsteil 6b besteht. Dabei weist das Verbindungsteil 6b die erwähnten Einschraubbohrungen 9 und 9a auf. Das Befestigungsteil 6a dient zur Festlegung des zusammengebauten, zweistückigen Sockels 6 an der Möbelplatte 3.

Die beiden Teile 6a und 6b sind vorzugsweise formschlüssig durch weiter unten noch zu beschreibende Rastungen miteinander verbindbar. Nach dem Zusammenfügen der beiden Teile 6a und 6b entspricht dieser zweistückige Sockel 6 in seiner Funktion einem einstückig hergestellten Sockel.

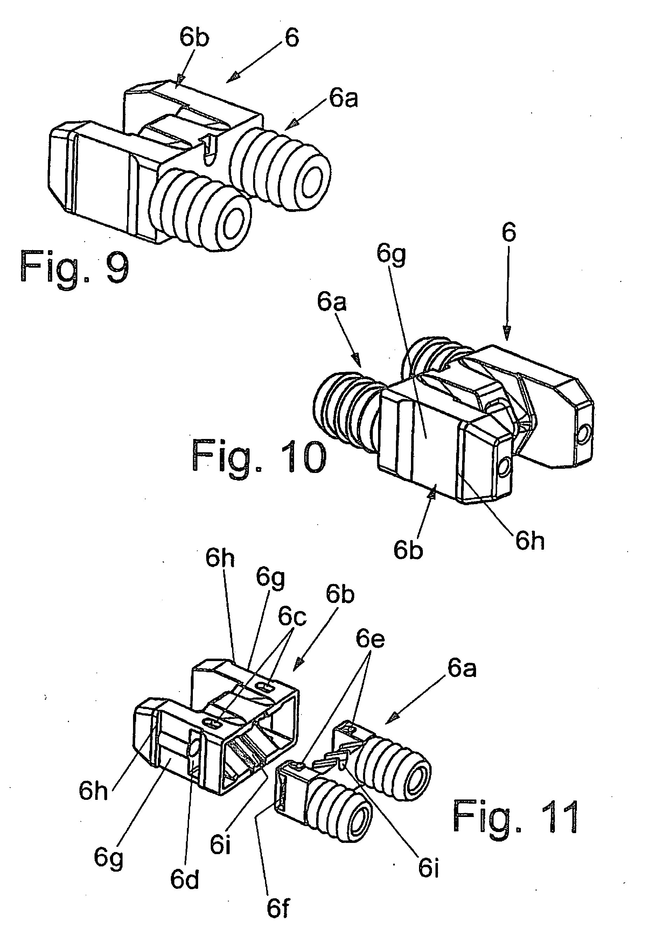

Die Figuren 9 bis 11 zeigen deutlich, wie die rastende Verbindung zwischen dem Befestigungsteil 6a und dem Verbindungsteil 6b erfolgt.

Das Verbindungsteil 6b ist hohlkammerartig ausgebildet und mit mehreren Rastausnehmungen 6c und 6d ausgestattet, in welche Rastvorsprünge 6e bzw. 6f des Befestigungsteiles 6a einrasten, wenn beide Teile 6a und 6b zusammengesteckt werden. Es ergibt sich somit eine formschlüssige Verbindung zwischen den beiden Teilen 6a und 6b.

Figur 11 macht darüber hinaus deutlich, dass jeweils im Befestigungsteil 6a wie auch im Verbindungsteil 6b spiegelsymmetrisch zueinander verlaufende Auskehlungen 6i angeformt sind, die im zusammengeschobenen Zustand die Einschraubbohrungen 9 bzw. 9a bilden.

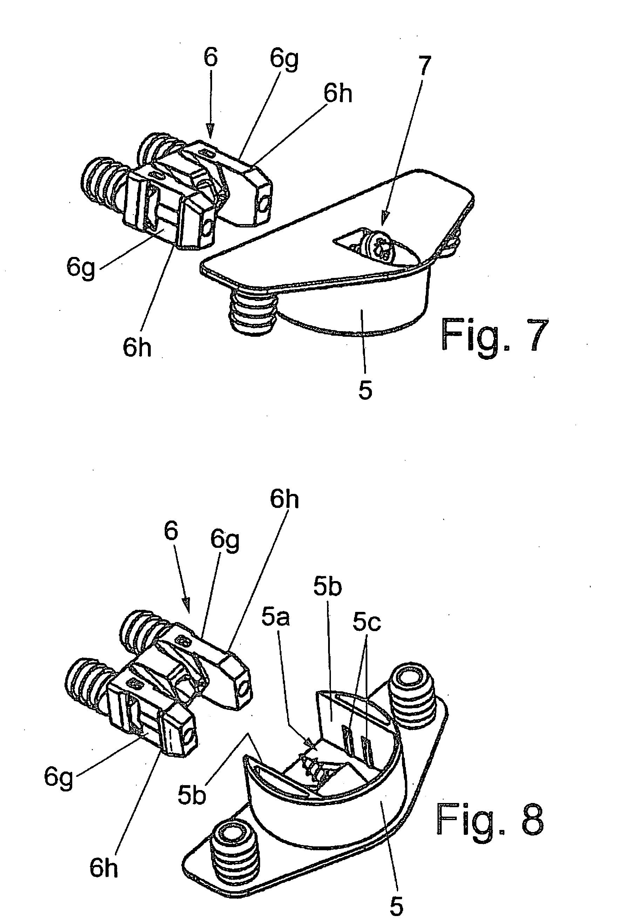

Wie sich aus den Figuren 7 und 8 sowie 12 und 13 deutlich ergibt, ist das Gehäuse 5 mit einer in Richtung des Sockels 6 offenen Einschubkammer 5a ausgestattet. Die parallel zueinander verlaufenden und in ihrem Abstand zueinander der Breite des Sockels entsprechenden Begrenzungswandungen 5b der Einschubkammer 5a sind mit versetzt zueinander angeordneten Raststegen 5c ausgestattet. Diese Raststege 5c greifen je nach Einschubtiefe des Sockels 6 in die Einschubkammer 5a in seitliche Freischneidungen 6g des Sockels 6 bzw. dessen Verbindungsteiles 6b ein, wobei die Freischneidungen 6g zur Seite des Gehäuses 5 hin begrenzt sind durch Rastanschläge 6h. Durch diese Rastanschläge 6h wird ein ungewolltes Trennen des Gehäuses 5 vom Sockel 6 verhindert.

Das vorstehend Erläuterte ist auch aus den Figuren 10 und 11 deutlich erkennbar.

Wie die Figuren 5 und 6 deutlich machen, wird durch das Zusammenschieben und gegenseitige Verrasten, wie vorstehend beschrieben, zwischen Gehäuse 5 und Sockel 6, eine Vormontagestellung gemäß Figur 5 ermöglicht, wobei in dieser Vormontagestellung die dem Sockel 6 am nächsten liegenden Raststege 5c die Rastanschläge 6h des Sockels 6 hintergreifen. In dieser Vormontagestellung ist schon eine provisorische Fixierung zwischen Gehäuse 5 und Sockel 6 erzielt. Zur endgültigen Montage werden die beiden Teile weiter zusammengeschoben, bis die dem Sockel 6 entfernt liegenden Raststege 5c die Rastanschläge 6h hintergreifen. Diese Position entspricht der in Figur 6 gezeigten Situation, d.h. in dieser Lage sind auch schon die beiden Möbelplatten 2 und 3 praktisch in einer aneinander liegenden Position. Durch Betätigung der Verbindungsschraube 7 wird nun das endgültige Festziehen der beiden Beschlagteile 5 und 6 und damit auch der Möbelteile 2 und 3 bewirkt.

Der Sockel 6 kann, wie in den meisten Ausführungsbeispielen gezeigt, mit Einschlagdübeln versehen sein und in entsprechende Bohrungen der Möbelplatte 3 eingeschlagen werden.

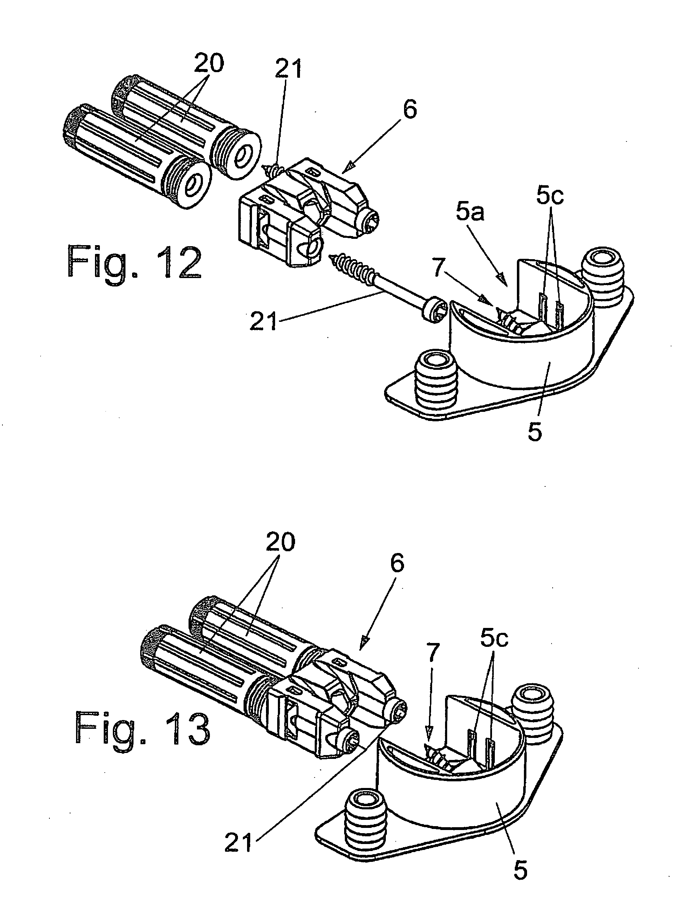

Sofern die Möbelplatte 3 als Leichtbauplatte mit einer inneren Wabenstruktur aufgebaut ist, können, wie dies die Figuren 12 und 13 zeigen, aber auch sogenannte Klebedübel 20 und Befestigungsschrauben 21 verwendet werden, mittels derer der Sockel 6 an der mit dem Klebedübeln 20 ausgestatten Leichtbauplatte befestigt werden kann.

In diesem Falle ist der Sockel 6 selbst mit keinerlei dübelartigen Ansätzen ausgestattet.

Auch das Gehäuse 5 wird in an sich bekannter Weise bevorzugt mit Einschlagdübeln ausgestattet und über diese Einschlagdübel gegenüber der ersten Möbelplatte 2 fixiert.

## Patentansprüche

1. Beschlag (1) zum Verbinden zweier Möbelplatten (2, 3), umfassend ein tangential angeschnittenes und in eine entsprechend angeschnittene Topfbohrung (4) einer ersten Möbelplatte (2) einsetzbares Gehäuse (5) und einen an einer zweiten Möbelplatte (3) festlegbaren Sockel (6), der teilweise in das Gehäuse (5) hineinragt und durch eine Verbindungsschraube (7), deren Gewindeholzen (8) in eine Einschraubbohrung (9) des Sockels (6) einschraubbar und deren Kopf (10) im Gehäuse (5) abgestützt ist, in Richtung des Gehäuses (5) anziehbar ist, wobei die Längsachse (11) der Verhindungssehraube (7) und der Einschraubbohrung (9) gegenüber der tangential verlaufenden Schnittfläche (12) des Gehäuses (5) geneigt verläuft, **dadurch gekennzeichnet, dass** der Sockel (6) eine zweite Einschraubbohrung (9a) aufweist, die gegenüber der ersten Einschraubbohrung (9) spiegelsymmetrisch verläuft und dass der gesamte Sockel (6) um eine durch den Schnittpunkt der Längsachsen (11, 11a) der beiden Einschraubbohrungen (9, 9a) verlaufende Mittelebene spiegelsymmetrisch ausgebildet ist.

2. Beschlag nach Anspruch 1, **dadurch gekennzeichnet, dass** der Sockel (6) zweistückig ausgebildet ist und ein Befestigungsteil (6a) sowie ein Verbindungsteil (6b) aufweist, wobei das Befestigungsteil (6a) mit Mitteln zur Festlegung an einer Möbelplatte (3) und das Verbindungsteil (6b) mit den Einschraubbohrungen (9, 9a) ausgestattet ist.

3. Beschlag nach Anspruch 2, **dadurch gekennzeichnet, dass** Gehäuse (5) und der Sockel (6) bzw. das Befestigungsteil (6a) und das Verbindungsteil (6b) des Sockels (6) aus Kunststoff hergestellt sind.

4. Beschlag nach Anspruch 3, **dadurch gekennzeichnet, dass** das Verbindungsteil (6b) durch Verrastung am Befestigungsteil (6a) festgelegt ist.

5. Beschlag nach Anspruch 4, **dadurch gekennzeichnet, dass** das Verbindungsteil (6b) hohlkammerartig ausgebildet und in seinem Wandungsbereich mit Rastaussparungen (6c, 6d) versehen ist, in welche Rastvorsprünge (6e, 6f) des Verbindungsteiles (6a) einrastbar sind.

6. Beschlag nach einem oder mehrere der Anspruche 2 bis 5, **dadurch gekennzeichnet**, das das Befestigungsteil (6a) und das Verbindungsteil (6b) mit spiegelsymmetrisch zueinander verlaufenden Auskehlungen (6i) versehen sind, die sich in zusammengesetzten Zustand von Befestigungsteil (6a) und Verbindungsteil (6b) jeweils zu einer der Einschraubbohrungen (9, 9a) ergänzen.

7. Beschlag nach einem oder mehreren der vorhergehenden Ansprüche, **dadurch gekennzeichnet**, das das Gehäuse (5) mit einer zum Sockel (6) hin offenen Einschubkammer (5a) versehen ist, deren einander gegenüberliegende und in ihrem Abstand der Breite des Sockels (6) entsprechenden Seitenwandungen (5b) mit Raststegen (5c) ausgestattet sind, die in Einschubriehtung hintereinander liegen und von denen jeweils einer einen dem Gehäuse (5) zugewandt Rastkante (6h) des Sockels (6) im Bereich einer Freischneidung (6g) hintengreift.

8. Beschlag nach einem oder mehreren der vorhergehenden Ansprüche, **dadurch gekennzeichnet, dass** der Sockel (6) bzw. das Befestigungsteil (6a) mit Einschlagdübeln ausgestattet ist.

9. Beschlag nach einem oder mehreren der Anspruche 1 bis 7, **dadurch gekennzeichnet, dass** der Sockel (6) mit Durchgangsbohrungen zur Hindurchführung von Verbindungsschrauben (21) zum Einschrauben in Klebedübel (20) ausgestattet ist.

10. Beschlag nach einem oder mehreren der Ansprüche 2 bis 6, **dadurch gekennzeichnet, dass** das Befestigungsteil (6a) und das Verbindungsteil (6b) des Sockels (6) um die Mittelebene des Sockels (6) spiegelsymmetrisch ausgebildet sind.

## Claims

1. Fitting (1) for connecting two furniture panels (2, 3), comprising a tangentially cut-away housing (5), which can be inserted into a correspondingly cut-away cup bore (4) in a first furniture panel (2), and a socket (6), which can be fixed to a second furniture panel (3), protrudes partially into the housing (5) and can be pulled in the direction of the housing (5) by a connecting screw (7), the threaded bolt (8) of which can be screwed into a screw-in bore (9) in the socket (6) and the head (10) of which is supported in the housing (5), wherein the longitudinal axis (11) of the connecting screw (7) and of the screw-in bore (9) is inclined with respect to the tangentially extending cut surface (12) of the housing (5), **characterized in that** the socket (6) has a second screw-in bore (9a), which extends in a mirror-symmetrical manner with respect to the first screw-in bore (9), and **in that** the entire socket (6) is designed in a mirror-symmetrical manner about a centre plane extending through the point of intersection of the longitudinal axes (11, 11a) of the two screw-in bores (9, 9a).

2. Fitting according to Claim 1, **characterized in that** the socket (6) is designed in two parts and has a fastening part (6a) and a connecting part (6b), wherein the fastening part (6a) is provided with means for fixing to a furniture panel (3) and the connecting part (6b) is provided with the screw-in bores (9, 9a).

3. Fitting according to Claim 2, **characterized in that** the housing (5) and the socket (6), or the fastening part (6a) and the connecting part (6b) of the socket (6), are made of plastics material.

4. Fitting according to Claim 3, **characterized in that** the connecting part (6b) is fixed to the fastening part (6a) by latching.

5. Fitting according to Claim 4, **characterized in that** the connecting part (6b) is designed in the manner of a hollow chamber and is provided in its wall region with latching cutouts (6c, 6d), into which latching protrusions (6e, 6f) of the fastening part (6a) can be latched.

6. Fitting according to one or more of Claims 2 to 5, **characterized in that** the fastening part (6a) and the connecting part (6b) are provided with channels (6i) which extend in a mirror-symmetrical manner with respect to one another and, in the assembled state of the fastening part (6a) and the connecting part (6b), each supplement one of the screw-in bores (9, 9a).

7. Fitting according to one or more of the preceding claims, **characterized in that** the housing (5) is provided with a push-in chamber (5a) which is open towards the socket (6) and has its opposite side walls (5b), which have a spacing between them corresponding to the width of the socket (6), provided with latching ribs (5c) which are located one behind the other in the push-in direction and in each case one of which engages behind a latching edge (6h) of the socket (6), said latching edge facing the housing (5), in the region of a clearance (6g).

8. Fitting according to one or more of the preceding claims, **characterized in that** the socket (6) or the fastening part (6a) is provided with drive-in plugs.

9. Fitting according to one or more of Claims 1 to 7, **characterized in that** the socket (6) is provided with through-bores through which can be guided connecting screws (21) for screwing into adhesive-bonding plugs (20) .

10. Fitting according to one or more of Claims 2 to 6, **characterized in that** the fastening part (6a) and the connecting part (6b) of the socket (6) are designed in a mirror-symmetrical manner about the centre plane of the socket (6).

## Revendications

1. Ferrure (1) pour l'assemblage de deux panneaux de meuble (2, 3), comportant un boîtier (5), ouvert tangentiellement et pouvant être inséré dans une forure (4) en forme de godet, ouverte de manière correspondante et ménagée dans un premier panneau de meuble (2), et un socle (6) apte à être fixé à un deuxième panneau de meuble (3) et s'engageant en partie dans le boîtier (5) et pouvant être serré dans la direction vers le boîtier (5) par une vis d'assemblage (7), dont la tige filetée (8) peut être vissée dans une forure de vissage (9) du socle (6) et dont la tête (10) est mise en appui dans le boîtier (5), l'axe longitudinal (11) de la vis d'assemblage (7) et de la forure de vissage (9) étant incliné par rapport à la surface de coupe (12), orientée tangentiellement, du boîtier (5), **caractérisée en ce que** le socle (6) comporte une deuxième forure de vissage (9a) qui s'étend symétriquement par rapport à la première forure de vissage (9), et **en ce que** l'ensemble du socle (6) est réalisé symétriquement autour d'un plan médian qui passe par le point d'intersection des axes longitudinaux (11, 11a) des deux forures de vissage (9, 9a).

2. Ferrure selon la revendication 1, **caractérisée en ce que** le socle (6) est réalisé en deux parties et comporte une partie de fixation (6a) et une partie d'assemblage (6b), ladite partie de fixation (6a) étant munie de moyens pour la fixation contre un panneau de meuble (3), et la partie d'assemblage (6b) étant munie des forures de vissage (9, 9a).

3. Ferrure selon la revendication 2, **caractérisée en ce que** le boîtier (5) et le socle (6), plus précisément la partie de fixation (6a) et la partie d'assemblage (6b) du socle (6), sont réalisés en matière plastique.

4. Ferrure selon la revendication 3, **caractérisée en ce que** la partie d'assemblage (6b) est fixée par blocage contre la partie de fixation (6a).

5. Ferrure selon la revendication 4, **caractérisée en ce que** la partie d'assemblage (6b) est réalisée sous forme de chambre creuse et, dans sa zone de paroi, est munie d'évidements de blocage (6c, 6d), dans lesquels peuvent se bloquer des saillies de blocage (6e, 6f) de la partie de fixation (6a).

6. Ferrure selon l'une quelconque des revendications 2 à 5, **caractérisée en ce que** la partie de fixation (6a) et la partie d'assemblage (6b) sont munies de gorges (6i), qui sont orientées symétriquement entre elles et qui, lorsque la partie de fixation (6a) et la partie d'assemblage (6b) sont assemblées l'une à l'autre, se complètent pour former respectivement l'une des forures de vissage (9, 9a).

7. Ferrure selon l'une quelconque des revendications précédentes, **caractérisée en ce que** le boîtier (5) est muni d'une chambre d'introduction (5a), qui est ouverte vers le socle (6) et dont les parois latérales (5b), opposées l'une à l'autre et écartées l'une de l'autre sur une distance correspondant à la largeur du socle (6), sont munies de nervures de blocage (5c), qui sont situées l'une derrière l'autre dans le sens d'introduction et parmi lesquelles respectivement une enserre par l'arrière un bord de blocage (6h) du socle (6), orienté vers le boîtier (5), dans la zone d'une découpe (6g).

8. Ferrure selon l'une quelconque des revendications précédentes, **caractérisée en ce que** le socle (6), plus précisément la partie de fixation (6a), est muni de chevilles à enfoncer.

9. Ferrure selon l'une quelconque des revendications 1 à 7, **caractérisée en ce que** le socle (6) comporte des trous débouchants pour le passage de vis d'assemblage (21) destinées à être vissées dans des chevilles adhésives (20).

10. Ferrure selon l'une quelconque des revendications 2 à 6, **caractérisée en ce que** la partie de fixation (6a) et la partie d'assemblage (6b) du socle (6) sont réalisées symétriquement autour du plan médian du socle (6).
